# EUROPEAN PATENT SPECIFICATION

(11) **EP 0 549 316 B1**
(45) Date of publication and mention of the grant of the patent: **24.05.2000**
(21) Application number: 92311679.2
(22) Date of filing: 21.12.1992
(51) Int. Cl.: G06T 3/60

(54) **Page buffer rotator**
Dreher für Seitenpuffer
Rotateur pour tampon de pages

(30) Priority: 23.12.1991 US 811854
(43) Date of publication of application: 30.06.1993
(73) Proprietor: XEROX CORPORATION, Rochester, New York 14644 (US)
(72) Inventor: Eldridge, George L., Long Beach, California 90815-1945 (US)
(74) Representative: Grünecker, Kinkeldey, Stockmair & Schwanhäusser Anwaltssozietät

(56) References cited:
- EP-A- 0 346 489
- EP-A- 0 433 645
- GB-A- 2 183 118
- CONFERENCE RECORD OF THE TWENTY-FIFTH ASILOMAR CONFERENCE ON SIGNALS, SYSTEMS AND COMPUTERS (CAT. NO.91CH3112-0), PACIFIC GROVE, CA, USA, 4-6 NOV. 1991, 101 - 105 VOL.1 ISBN 0-8186-2470-1 Grimm M J et al 'Multimegapoint FFT's running on workstation computers'

## Description

The invention relates to a method for rotating an input image through 90 degrees.

Some printing features such as signature printing require that an image be rotated by 90 degrees. The simplest method of performing a rotation would be to have a page buffer constructed of a two-dimensional memory array that could be addressed by column or by row. The data would be written into the buffer with the words along the column direction and then read out with the words along the row direction.

This rotation could be considered to take zero time since the same number of read and write operations must be performed as with an unrotated image. The only thing that must be done is to change the mode of memory from column mode to row mode (i.e., rotated mode). Also, by changing the mode of the memory while loading objects into the buffer, images may be constructed of rotated and unrotated objects. Unfortunately, the memory devices needed to build a page buffer with both row and column access do not yet exist commercially.

Some inventions handle this requirement by the provision of a specially designed memory which can read in the image data words in one direction and read out in an orthogonal direction. However, such special purpose memories are expensive, and tend to have small capacities.

A method and circuit for producing these rotations at high speed without the necessity of special memory hardware is described in US-A-5,111,192 (EP-A-0 433 645) entitled "Method To Rotate A Bitmap Image 90 Degrees". In its simplest form, this prior invention can be described with reference to a 4 by 4 bit block of binary pixels in memory arranged as four vertical words of four bits each, which must be rotated 90 degrees. The method can be explained as the addition of the rotation of the bits within each 4 by 4 bit block and the rotation of the blocks of the whole image. To rotate bits within a block, the first 4 bit word is loaded into the first line of a 4 by 4 bit buffer. The next word is circularly rotated upward one bit and loaded into the second line of the buffer. The third word is circularly shifted two bits and loaded into the third line of the buffer and the fourth line is circularly shifted three bits and loaded into the fourth line of the buffer. At this point a vertical line in the original image is still a vertical line in the buffer, but a horizontal line in the original is now a diagonal line in the buffer.
Since the buffer is implemented from "by 1" devices, any bit in each device is addressable independently of the other devices, and a bit in one word in the buffer can be loaded into any bit of the four words of memory. Therefore, if the bits in the buffer are addressed along diagonal lines parallel to the diagonal line in the buffer and loaded into single words of the memory, the diagonal line in the buffer will become a vertical line at the output. Continuing with addressing the bits along diagonal lines, the vertical line in the buffer will become a diagonal line at the output. The output four words, prior to storage in memory, are shifted to line up the diagonal bits into a horizontal line. Since this line started as a vertical line, it can be seen that the 4 by 4 bit block has now been completely rotated 90 degrees. To rotate the blocks within the image, a simple addressing algorithm provides that the blocks read out of the block buffer are read in the correct sequence.

It is therefore the object of the invention to provide a method for rotating an input image through 90 degrees which requires low buffer capacity even when applied to images of any shape.

This object is solved by the subject matter of independent claim 1 with preferred embodiments being defined in the dependent claims.

This invention accomplishes the desired result by providing a virtual address space of 256 Megabits, mapped into a real memory of 64 Megabits. Each memory device is assumed to be a 1 Megabit by 1 bit DRAM,and each block of memory is 1,024 bits square. The image lines are read into the current block, line by line. Assuming 12,288 bits per image line, the first image line will be stored in the first line of the first 12 blocks, and the next image line will start again at the start of the second line of the first block.

A counter is used to count the image bits. When the unrotated image data is read out of the buffer, the counter must jump to the start of the next line after each 12,288 bits. Similarly, when reading out a rotated image the counter must start the next line after 5,120 bits. The image rotation is performed at the maximum rate that data can be read into and out of the page buffer, and therefore takes no more time than is taken by a page buffer that does not have the capacity to rotate an image.

The invention, in its broadest and most general form, may be described as a buffer memory which can be used for the rotation of an image of any shape, provided only that the number of blocks in the image does not exceed the number of equally sized blocks in the buffer. This process can be thought of as a combination of two independent processes. The first is the rotation of the data within each block, and is the prior art process of first shifting, reorganizing and second shifting the data internal to each block. The second step is the use of some kind of addressing mechanism, software or hardware, to indicate where each block, now internally rotated, of the original image is to be placed in the final image. This specification describes one particular hardware solution to this problem involving the redistribution of address bits, but any other suitable method including a logical equation approach could also be used.

Embodiments of the invention will now be described, by way of example, with reference to the accompanying drawings, in which:
Fig 1 shows the arrangement of the virtual memory with rotated and unrotated images;
Fig 2 shows the mapping of virtual to real blocks for the unrotated image of Fig 1;
Fig 3 shows a different arrangement of rotated and unrotated images in virtual memory;
Fig 4 shows the mapping of virtual to real blocks for the unrotated image of Fig 3;
Fig 5 is the layout of an individual block;
Fig 6 shows how an unrotated image is stored in a memory block;
Fig 7 shows how a rotated image is stored in a memory block;
Fig 8 shows the origin of the data in the address fields;
Fig 9 shows the mapping between a 24-bit virtual address and a 22-bit real address for an unrotated image;
Fig 10 shows the mapping between a 24-bit virtual address and a 22-bit real address for a rotated image;
Fig 11 shows the most efficient mapping of the real address for the RAM devices;
Fig 12 shows the mapping of a virtual address with rotation to a virtual address without rotation; and
Fig 13 is a simple embodiment of the invention which uses a table look-up to perform the block rotation.

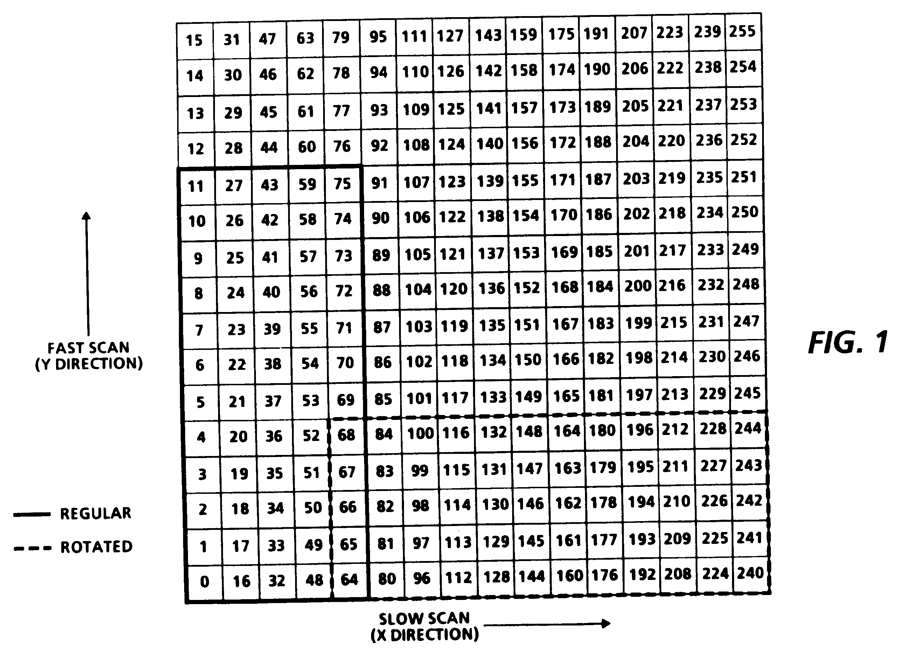

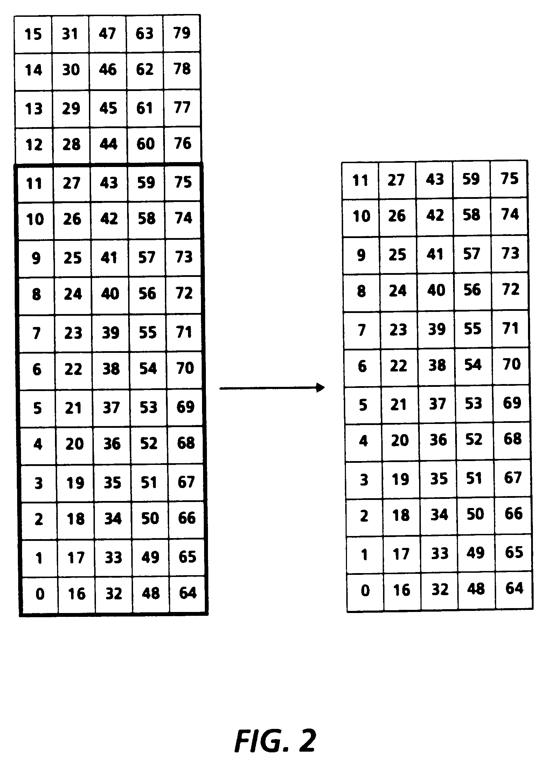

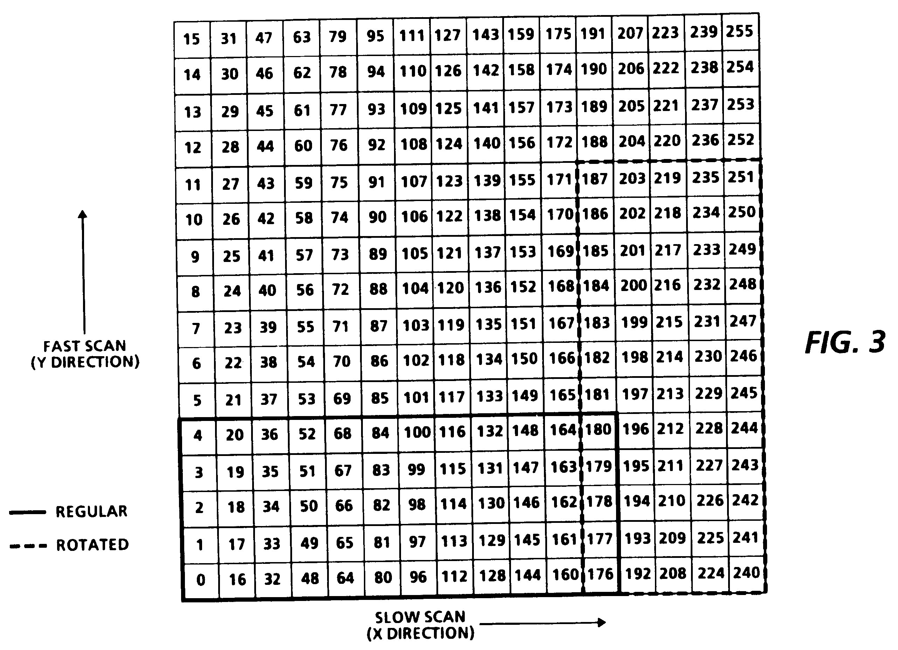

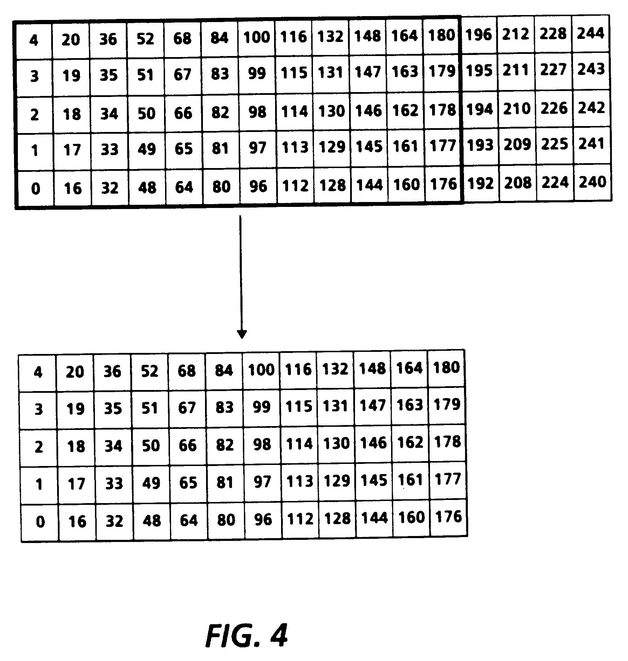

The arrangement of the virtual memory is shown in Figure 1. These virtual blocks are mapped into blocks of real memory with an address translation PROM. Figure 2 shows the mapping of virtual blocks to real blocks for the unrotated area of 12,288 bits by 5,120 lines. There would also be a similar map for a rotated image, as shown in Figures 3 and 4. A third mode could be for an image 8,192 bits square, not shown.

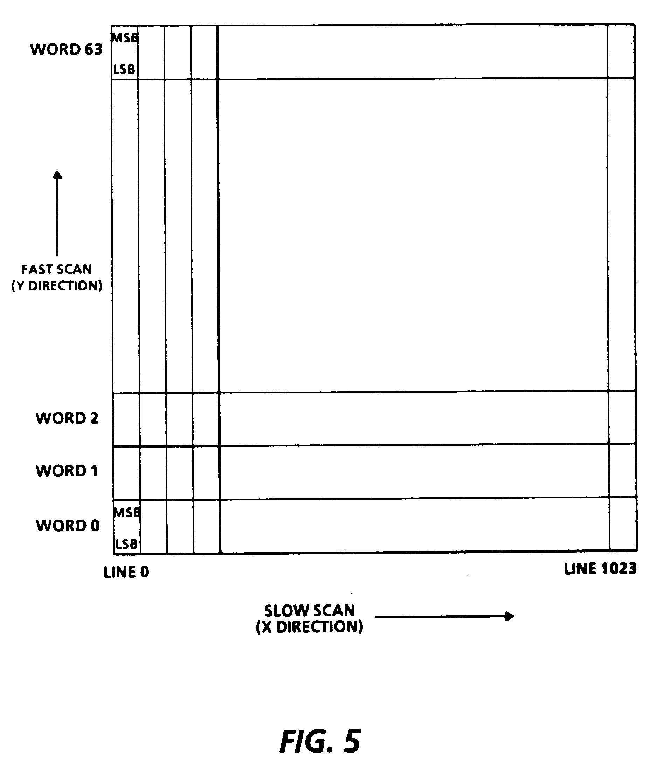

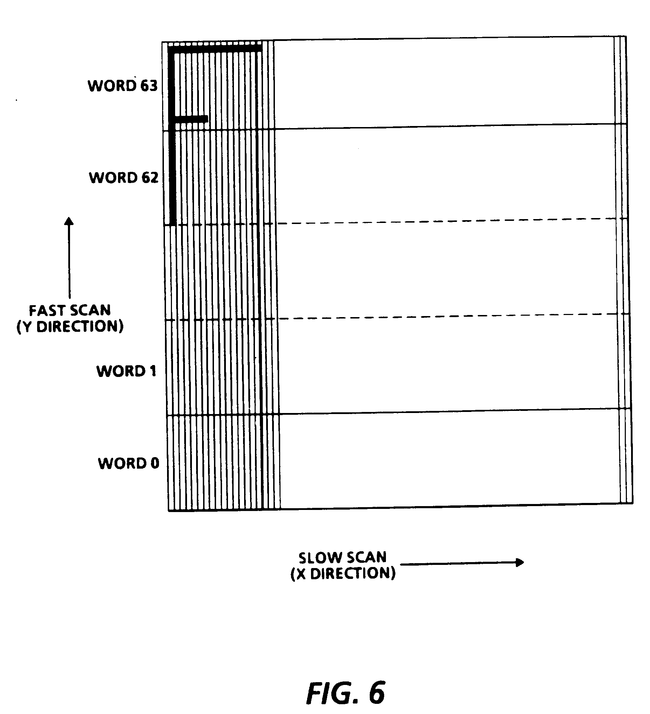

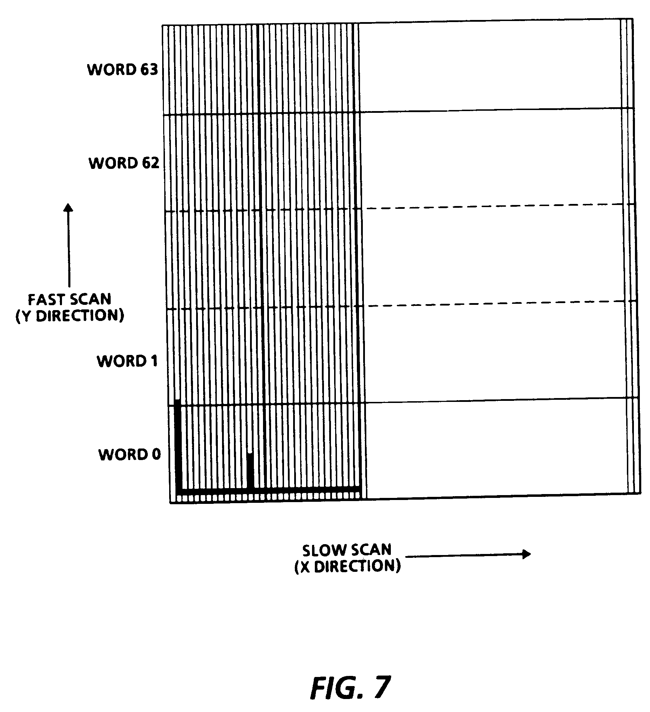

The layout of an individual block is shown in Fig 5. Each word is 16 bits, and each bit resides in a different DRAM device. In other words, device #1 will store bit 0 of all 64 words of all 1024 lines in the block, device #1 will store bit 1 of all 64 words of all 1024 lines in the block, etc. In terms of Figs 6 and 7, for example, the contents of a single device would appear as horizontal lines.

The primary problem with rotation is that a line that is completely contained in one DRAM device in the unrotated buffer must be spread across 16 words in the rotated buffer. This can be seen by comparing Figs 6 and 7. In Fig 6 the bits forming the top horizontal part of the letter "F" all reside in the same device. In Fig 7 the same top portion of the letter is spread across 16 devices, from bit 1 of word 0 to bit 0 of word 1. The brute force method of rotation would require 16 read operations of the device in Fig 6 to get the bits that form the word in the rotated direction. The solution to the problem used here is to arrange the data, as it is read into the page buffer, so that each of the bits is in a different device. This is done by circularly shifting each word by the word number, mod 16, "scanline mod 16", to the right (toward the LSB). In other words, the bits of word 0 are shifted 0 bits into device 0, word 1 is shifted 1 bit into device 1, . . . word 15 is shifted 15 bits into device 15, word 16 is shifted 0 bits into device 0, etc. Now, since every device is individually addressable, each bit of the word is also individually addressable. The data can now be either rotated or returned to its original form if rotation is not needed. To return the image to its original form the data is simply read out and shifted back.

To rotate the image, each device must be individually addressed. Since 16 devices are required to store one word, there are four address bits that are different for each RAM device, but the address bits are multiplexed, so only two physical lines need to be run radially to each device. The remaining address lines are common to all the RAM's.

To read or write in the rotated mode, address translation is performed. It is possible to translate a virtual page buffer address with rotation into a real address through logical operations on the address. One arithmetic operation is required to calculate the value of the radial address lines that go to each RAM. For a read operation the 16 bits read from the RAM's must be rotated to the right the distance of "scanline mod 16" and then the word must be reversed (bit 15 becomes bit 0, etc.). The resulting data is the 16-bit word in the rotated direction. For a write operation the process is reversed.

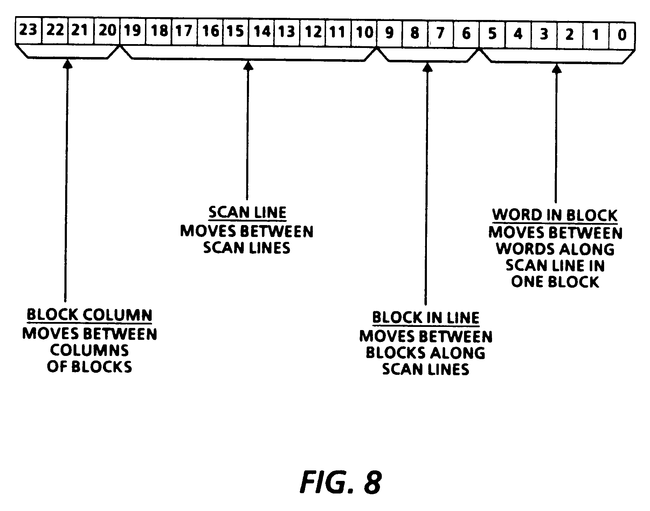

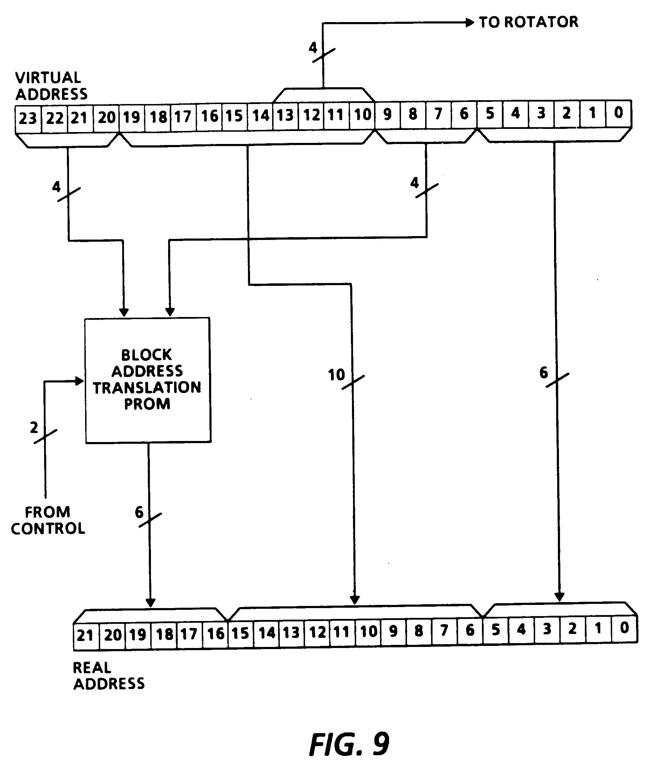

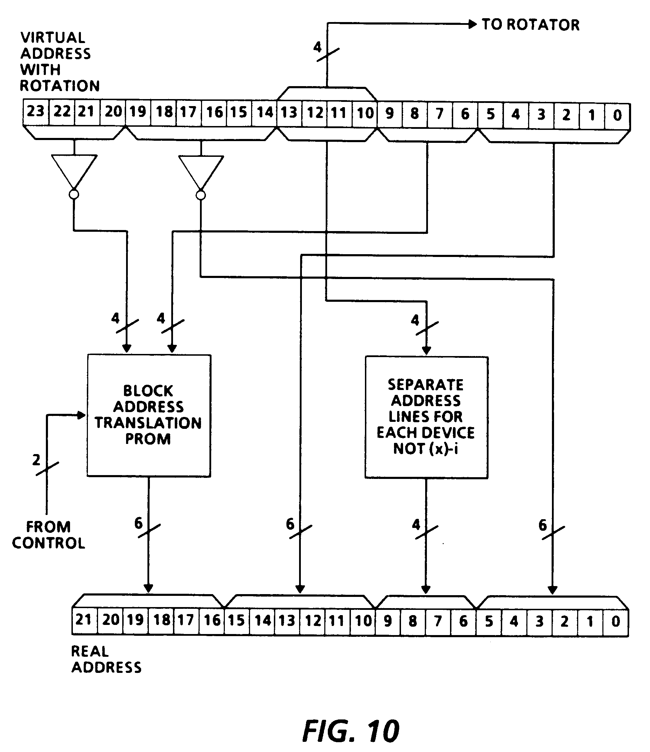

The virtual address of any word in the page buffer is composed of a number of fields as indicated in Fig 8. The virtual address is a 24-bit address. Mapping of the 24-bit virtual address to a 22-bit real address is performed by the method presented in Fig. 9. For a virtual address with rotation, the method of Fig. 10 is used.

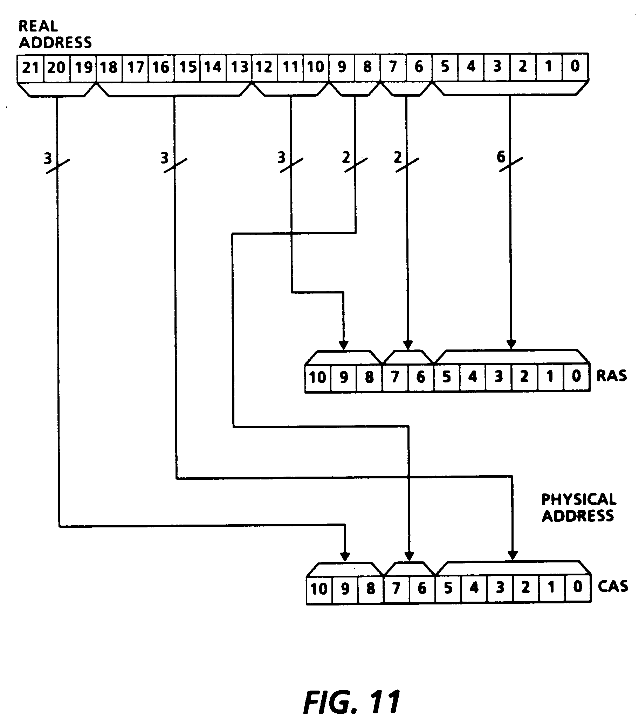

The most efficient mapping of the real address for the RAM devices is described in Fig 11. This mapping places the four address bits that must be different for each RAM on two bits of the CAS (column address). This method requires only two radial lines for each RAM.

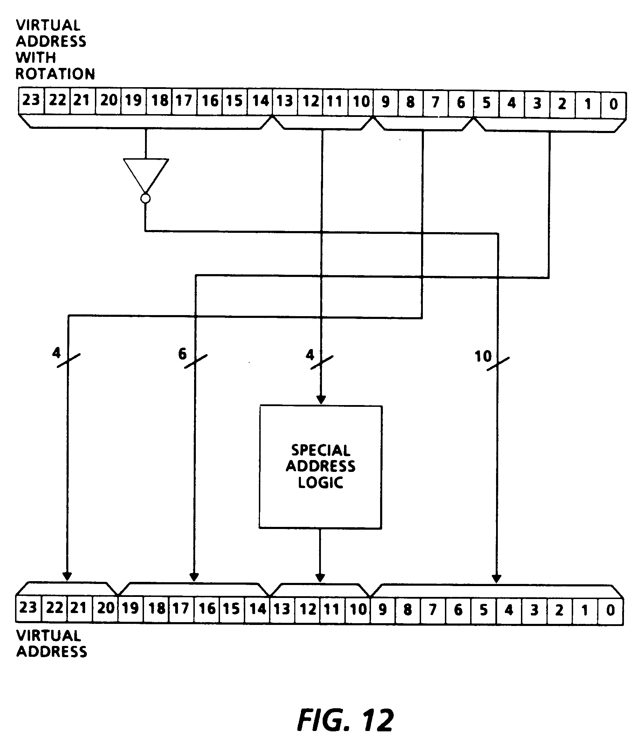

The mapping of a virtual address with rotation to a virtual address without rotation is shown for reference in Fig. 12.

The 256 1K x 1K blocks that make up the page buffer can be arranged in rectangular areas. The following table shows all of the combinations available when using 64 blocks of real memory (64 Megabits). A size of 5x12 has been chosen for the following example.

| Blocks | Inches at 600 spi |
|---|---|
| 1 x 64 | 1.71" x 109.23" |
| 2 x 32 | 3.41" x 54.61" |
| 3 x 21 | 5.21" x 35.84" |
| 4 x 16 | 6.83" x 27.31" |
| 5 x 12 | 8.53" x 20.48" |
| 6 x 10 | 10.24" x 17.07" |
| 7 x 9 | 11.95" x 15.36" |
| 8 x 8 | 13.65" x 13.65" |

The mapping uses a PROM. For 3 different mappings such as a 5 x 12, 12 x 5 and 8 x 8, 2 bits of control are required for the PROM. Add to that the 8 bits that describe the 256 virtual blocks, and a 1K by 6 bit PROM with fast access is needed. The address bits from the PROM go to the CAS address to "hide" the access time of the PROM.

It is possible to use smaller size blocks. Using 512 bits by 512 line blocks would give slightly better control of the rectangular image size. However, 256 real blocks in a space of 1,024 virtual blocks would be needed. This would require a 4K by 8 bit PROM mapping.

The rotation method presented will perform a 90 degree rotation of an image at the full speed of operation of the memory. Using this rotation in conjunction with the X and Y direction controls of the virtual memory, it is possible to get all four 90-degree rotations and their reflections. If rotation is performed as the data is written into the buffer, then data can be read from the buffer using the nibble mode.

Conceptually, this method operates by "rotating the data halfway" as it is written into the page buffer. For regular operation the data is "rotated back to normal" as it is read back. For rotation operation, the data is "rotated the rest of the way" as it is read out.

If this memory is considered to be a black-box, then it appears to be a two-dimensional memory array that can be accessed either with words along the column direction or with words along the row direction.

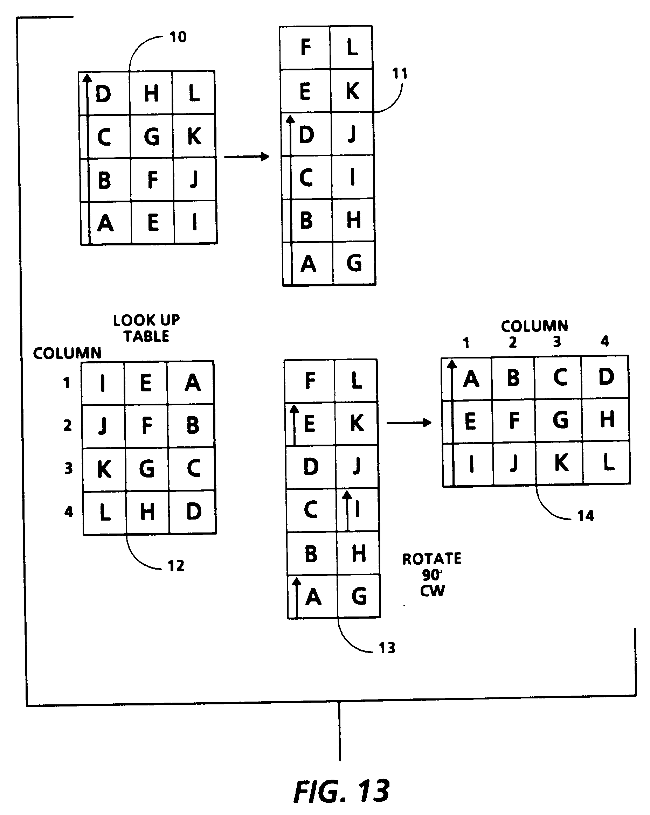

An alternative method of block rotation using a table look-up is shown in Fig 13. The image 10 in this example is four blocks by three blocks, labeled A through L, and is received one complete scan line at a time. The first scan line, which extends through blocks A through D is shown as an arrow along the left side of the image. The buffer 11 must have a capacity equal to, or greater than, that required to contain the image, as shown, but does not have to be arranged in any particular arrangement. The scan lines are simply loaded into the buffer blocks in sequential order as shown.

For a particular image size, in this case three by four blocks, and for a specific rotation, in this case clockwise 90 degrees, there will be a specific order in which the buffer must be read out, and this order can be stored in a PROM 12. As shown, column 1 of the output must come from blocks I, E and A, in that order, and this sequence is stored in the first line of the PROM. Thus, as shown, the first scan line of the first output column must be taken from blocks I, E and A of the buffer 13 to produce the first scanline of the output image 14.

In another embodiment of the invention, there may be more than one bit per pixel, in which case several RAM's in parallel or a RAM device more than one bit wide could be used. Circular shifts in different directions and reading or writing sequences proceeding from either end of a block could be used to create different rotations, or mirror images of these rotations. Further, the image pixels can be rearranged either at the time the data is read into the buffer, or when it is read out.

The embodiment shown in the specification assumes a shift from an 8 1/2 by 11 image to one that is 11 by 8 1/2, but the process can be reversed to start with 11 by 8 1/2.

Many hardware and software alternatives exist for translating from an unrotated to a rotated block arrangement.

## Claims

1. A method of rotating an input image through 90° to form an output image, the input image being of any shape and being defined by a maximum of m first blocks, each block comprising n input lines each of n pixels, the method comprising the steps of.-
providing a buffer memory capable of storing m first blocks of the input image;
storing each of the first blocks of the input image in a location in the buffer memory; said step of storing includes circularly shifting the pixels within each of the first blocks;
reading out the buffered data from the buffer memory, to produce the rotated image, and providing a virtual memory which is large enough in both dimensions to contain the input image,
characterized in that said reading out step comprises
dividing the virtual memory and the buffer memory each into a plurality of second blocks each having the same predetermined size; and
using an address translation mechanism to map each second block in the virtual memory to a corresponding block in the buffer memory, said mapping being performed in accordance with the image size and shape.

2. The method according to claim 1, characterized in that the step of mapping each second block comprises the step of using a PROM which holds for particular image sizes corresponding mapping information.

3. The method according to claim 1 or 2, characterized in that said circularly shifting is achieved by circularly shifting each input line in each first block by the line number, mod n.

4. The method according to one of claims 1 to 3, characterized that said step of reading out the buffered data comprises circularly shifting each buffer line in each block by the line number, mod n.

## Patentansprüche

1. Verfahren zum Drehen eines Eingabebildes um 90°, um ein Ausgabebild zu bilden, wobei das Eingabebild von beliebiger Form ist und durch eine Maximalzahl von m ersten Blöcken definiert ist, wobei jeder Block n Eingabezeilen von jeweils n Pixeln umfaßt, wobei das Verfahren die folgenden Schritte umfaßt:
Bereitstellen eines Pufferspeichers, der m erste Blöcke des Eingabebildes speichern kann;
Speichern jedes der ersten Blöcke des Eingabebildes in einer Speicherstelle in dem Pufferspeicher, wobei der Schritt des Speichers ein zirkulares Verschieben der Fixe innerhalb jedes der ersten Blöcke umfaßt;
Auslesen der gepufferten Daten aus dem Pufferspeicher, um das gedrehte Bild zu erzeugen; und
Bereitstellen eines virtuellen Speichers, der in beiden Dimensionen groß genug ist, um das Eingabebild zu enthalten;
**dadurch gekennzeichnet,** daß der Schritt des Auslesens umfaßt:
Aufteilen des virtuellen Speichers und des Pufferspeichers jeweils in eine Vielzahl von zweiten Blöcken, die jeweils dieselbe vorbestimmte Größe aufweisen; und
Verwenden eines Adreßübersetzungsmechanismus zum Abbilden jedes zweiten Blocks in dem virtuellem Speicher auf einen entsprechenden Block in dem Pufferspeicher, wobei die Abbildung in Übereinstimmung mit der Bildgröße und -form durchgeführt wird.

2. Das Verfahren nach Anspruch 1, **dadurch gekennzeichnet,** daß der Schritt des Abbildens jedes zweiten Bocks den Schritt des Verwendens eines PROM umfaßt, der für bestimmte Bildgrößen entsprechende Abbildungsinformationen enthält.

3. Verfahren nach Anspruch 1 oder 2, **dadurch gekennzeichnet,** daß das zirkulare Verschieben durch zirkulares Verschieben jeder Eingabezeile in jedem ersten Block um die Zeilennummer mod n erfolgt.

4. Verfahren nach einem der Ansprüche 1 bis 3, **dadurch gekennzeichnet,** daß der Schritt des Auslesens der gepufferten Daten das zirkulare Verschieben jeder Pufferzeile in jedem ersten Block um die Zeilennummer mod n umfaßt.

## Revendications

1. Procédé de rotation d'une image d'entrée sur 90° pour former une image de sortie, l'image d'entrée étant de toute forme quelconque et étant définie par un maximum de m premiers blocs, chaque bloc comprenant n lignes d'entrée, chacune de n pixels, le procédé comprenant les étapes consistant à :
prévoir une mémoire tampon capable de mémoriser m premiers blocs de l'image d'entrée,
mémoriser chacun des premiers blocs de l'image d'entrée dans un emplacement de la mémoire tampon, ladite étape de mémorisation comprenant un décalage circulaire des pixels à l'intérieur de chacun des premiers blocs,
lire en sortie les données mises en mémoire tampon depuis la mémoire tampon, pour produire l'image ayant subi une rotation, et prévoir une mémoire virtuelle qui est suffisamment grande dans les deux dimensions pour contenir l'image d'entrée,
caractérisé en ce que ladite étape de lecture en sortie comprend la division de la mémoire virtuelle et de la mémoire tampon, chacune en une pluralité de seconds blocs, chacun présentant la même taille prédéterminée, et l'utilisation d'un mécanisme de conversion d'adresse pour mapper chaque second bloc de la mémoire virtuelle sur un bloc correspondant dans la mémoire tampon, ledit mappage étant exécuté conformément à la taille et la forme de l'image.

2. Procédé selon la revendication 1, caractérisé en ce que l'étape de mappage de chaque second bloc comprend l'étape d'utilisation d'une mémoire PROM qui convient pour des tailles d'image particulières correspondant aux informations de mappage.

3. Procédé selon la revendication 1 ou 2, caractérisé en ce que ledit décalage circulaire est obtenu par un décalage circulaire de chaque ligne d'entrée dans chaque premier bloc par le numéro de ligne, modulo n.

4. Procédé selon l'une des revendications 1 à 3, caractérisé en ce que ladite étape de lecture en sortie des données mises en mémoire tampon comprend le décalage circulaire de chaque ligne de la mémoire tampon dans chaque premier bloc par le numéro de ligne, modulo n.
